# EUROPEAN PATENT SPECIFICATION

(11) **EP 2 569 243 B1**
(45) Date of publication and mention of the grant of the patent: **01.07.2015**
(21) Application number: 10851528.9
(22) Date of filing: 20.09.2010
(51) Int. Cl.: B66B 7/06, D07B 1/04, D07B 1/16, D03D 1/00, D03D 15/00, D03D 15/02, D07B 1/22, D07B 5/04, B29C 61/02

(54) **Woven load bearing member for a traction elevator system and method of making this member**
Gewebtes Zugseil für die Antriebsvorrichtung eines Aufzugs und Herstellverfahren dafür
Câble tracteur tissé pour l'ensemble d'entraînement d'un ascenseur et procédé de fabrication d'un tel câble

(30) Priority: 13.05.2010 WO PCT/US2010/003464
(43) Date of publication of application: 20.03.2013
(73) Proprietor: Otis Elevator Company, Farmington, CT 06032 (US)
(72) Inventor: WESSON, John P., Vernon, CT 06066 (US); KRISHNAN, Gopal R., Wethersfield, CT 06109 (US)
(74) Representative: Ramsay, Laura Anne
(86) International application number: PCT/US2010/049433
(87) International publication number: WO 2011/142775

(56) References cited:
- GB-A- 1 559 380
- JP-A- 2004 155 589
- JP-A- 2008 521 728
- JP-B2- 4 220 965
- KR-A- 20080 014 697
- US-A- 1 475 250
- US-A- 3 148 710

## Description

### BACKGROUND

There are a variety of uses of elongated load carrying members such as round ropes or flat belts. One such use is to suspend the loads in elevator systems and known load carrying members are used for driving/propulsion in elevator systems. Round steel ropes have been the industry standard for many years. More recently flat belts including a plurality of tension member cords substantially retained in a jacket have been used in elevator systems. While there are advantages associated with such belts in an elevator system, there are also challenges presented.

For example, one challenge presented by some elevator belts is achieving a desired amount of traction between the belt and a traction sheave that causes movement of the belt and thus the elevator car. Different approaches have been suggested to achieve particular traction characteristics on a surface of an elevator belt. One approach is shown in the Published International Application WO 2005/094255. In that document, a jacket includes a roughened surface to provide desired friction characteristics.

US 1,475,250 describes a flat belt for hoisting elevators which uses steel wires for both the warp and weft of the fabric and which may be covered by a fabric of cotton or asbestos which has the capacity of being impregnated by an impregnating material.

### SUMMARY

An exemplary elongated elevator load bearing member for a traction elevator system, comprises: a plurality of tension elements that comprise metal; and a plurality of non-metallic weave fibers transverse to the tension elements and woven with the tension elements, the weave fibers defining at least one traction surface of the load bearing member; and an elastomer coating over the weave fibers, the coating having an exterior surface texture defined at least in part by the weave fibers.

An exemplary method of making an elongated elevator load bearing member for a traction elevator system, comprises the steps of: providing a plurality of metal tension elements; weaving a plurality of non-metallic weave fibers together with the tension elements; and establishing a traction surface on at least one side of the load bearing member, the traction surface being defined by the weave fibers; and coating the weave fibers with an elastomer coating, the coating having an exterior surface texture defined at least in part by the weave fibers.

The various features and advantages of the disclosed examples will become apparent to those skilled in the art from the following detailed description. The drawings that accompany the detailed description can be briefly described as follows.

### BRIEF DESCRIPTION OF THE DRAWINGS

Figure 1 schematically shows selected portions of an example elevator system.
Figure 2 diagrammatic ally illustrates an example load bearing member having a traction surface defined by weave fibers that are woven together with tension elements.
Figure 3 schematically shows one example weave pattern that defines the correspondingly configured traction surface.
Figure 4 schematically shows another example weave pattern that defines a correspondingly configured traction surface.
Figure 5 schematically shows another example weave pattern that establishes a correspondingly configured traction surface.
Figure 6 is a cross-sectional illustration of another example load bearing member.

### DETAILED DESCRIPTION

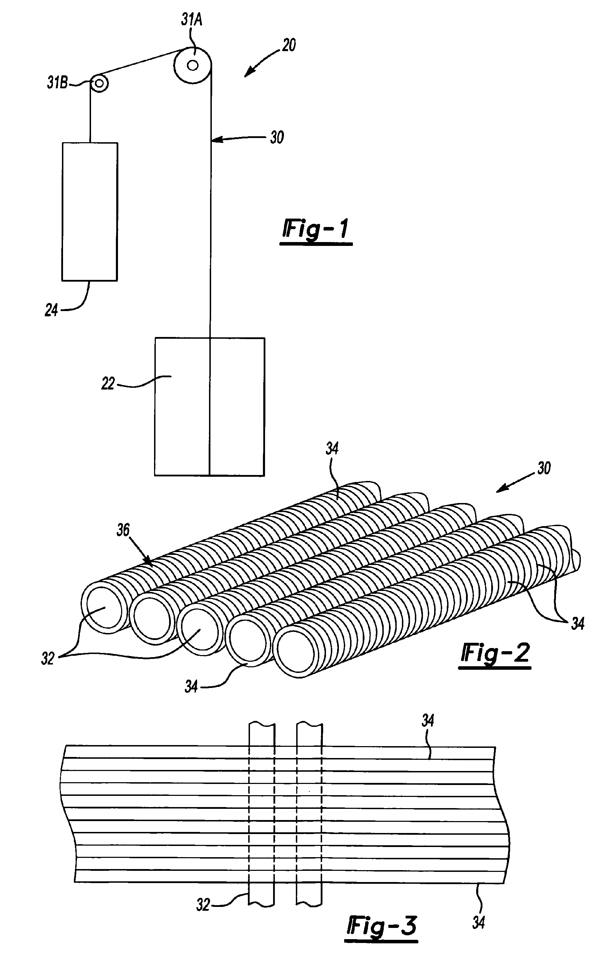

Figure 1 schematically shows selected portions of an example traction elevator system 20. The illustrated example is for discussion purposes only. Features of the elevator system 20 that are not required for an understanding of the present invention (e.g. guide rails, safeties, etc.) are not shown or discussed. Those skilled in the art will appreciate that the present invention could be used in a variety of elevator system configurations and not only the specific example shown in this Figure. This example includes an elevator car 22 coupled with a counterweight 24 by one or more elongated elevator load bearing members 30 in a 1:1 roping arrangement. Other roping arrangements, such as 2:1 or greater, are possible. The weight of the elevator car 22 and counterweight 24 is suspended by the elongated elevator load bearing members 30. A traction sheave 31A causes desired movement of the elongated elevator load bearing members 30 to achieve desired movement and placement of the elevator car 22 within the hoistway. The elevator system 20 could include one or more deflector pulleys 31B as seen in Figure 1 that also engage the elongated elevator load bearing members 30 or one or more idler or diverter pulleys on the car 22 and/or counterweight 24 (for example to provide an overslung or underslung roping arrangement) that also engage the elongated elevator load bearing members 30.

Figure 2 illustrates an example elongated elevator load bearing member 30. This example includes a plurality of tension elements 32. As can be appreciated from the drawing, the tension elements 32 are arranged generally parallel to each other and extend in a longitudinal direction that establishes a length dimension of the elongated elevator load bearing member 30. A plurality of weave fibers 34 are woven together with the tension elements 32. In this example, the weave fibers 34 and the tension elements 32 are woven together into a fabric that maintains the tension elements 32 in a desired orientation relative to each other. In other words, the weave fibers 34 substantially retain the tension elements 32 in position. The phrase "substantially retained" means that the weave fibers 34 sufficiently engage the tension elements 32 such that the tension elements 32 do not pull out of, or move relative to, the weave fibers 34 in use (i.e., during the application on the elongated elevator load bearing member 30 of a load that can be encountered during use in an elevator system 20 with, potentially, an additional factor of safety). The weave fibers 34 have a length that is transverse to the length or longitudinal direction of the tension elements 32.

The example load bearing members 30 include a traction surface 36 on at least one side of the load bearing member 30. The traction surface 36 is defined by the weave fibers 34. In this description, having the traction surface 36 defined by the weave fibers 34 includes a coating over the weave fibers 34 having a surface contour that is defined by the presence of the weave fibers 34.

The tension elements 32 are the primary load bearing structure of the elevator load bearing member 30. In some examples, the weave fibers 34 do not support the weight of the elevator car 22 or counterweight 24. Nevertheless, the weave fibers 34 do form part of the load path. The weave fibers transmit the traction forces between the traction sheave 31 and the elevator load bearing member 30 to the tension elements 32. Such traction force transmission is indirect (the weave fibers 34 are coated and the coating establishes the exterior of the traction surface 36)

The weave fibers 34 are arranged in a pattern relative to the tension elements 32 so that a spacing between the traction surface 36 and the tension elements 32 prevents the tension elements 32 from contacting any component that the traction surface 36 engages. For example, the tension elements 32 will not contact a surface on the traction sheave 31 as the load bearing member 30 wraps at least partially about the tension sheave 32. The size of the weave fibers 34, the material of the weave fibers 34, the pattern of the weave fibers 34 or a combination of these is selected to ensure the desired spacing between the tension elements 32 and the traction surface 36 so that the tension elements 32 are protected from engagement with a component such as the traction sheave 31.

In one example, a coating over the weave fibers 34 ensures that the tension elements 32 are sufficiently spaced from the traction surface 36 so that the tension elements 32 will not directly engage or come in contact with another component in the elevator system 20 such as a surface on the traction sheave or another sheave. In this example, an exterior surface of the coating is the traction surface 36.

In one example the tension elements 32 comprise a first material and the weave fibers 34 comprise a second, different material. In the illustrated example, the weave fibers 34 have a much smaller thickness or cross-sectional dimension compared to that of the tension elements 32. According to the invention, the tension elements 32 are metallic, such as drawn steel, and the weave fibers 34 comprise non-metallic materials, such as polymers for example.

In some examples, the weave fibers 34 include or comprise an elastomer material that is useful for establishing the traction surface 36. One example includes establishing weave fibers 34 of a desired material and then coating the fibers with the elastomer material. Another example includes establishing the woven fabric that includes the tension elements 32 and the weave fibers 34 and then coating at least the weave fibers 34 at least partially with the selected elastomer material. Another example includes making each of the weave fibers 34 out of a plurality of filaments and including filaments made of the selected elastomer material within each of the weave fibers 34. Another example includes impregnating the weave fibers 34 with a selected elastomeric material.

One example elastomer material comprises a urethane. Thermoplastic polyurethane is used on one example.

A variety of different weave patterns can be used to weave together the weave fibers 34 and the tension elements 32. Figure 3 shows one such example pattern of the weave fibers 34. In this example, the weave fibers 34 are aligned generally parallel to each other and generally perpendicular to the longitudinal direction of the tension elements 32. Figure 3 is not intended to illustrate a complete woven fabric or a complete load bearing member 30. Instead, Figure 3 is intended to illustrate the weave pattern of the weave fibers 34.

In an example weave pattern like Figures 2 and 3, the traction surface 36 could have a non-continuous or non-planar surface texture. As can be appreciated from the illustrations, a plurality of ridges will be generally parallel to each other and transverse to the longitudinal direction or length of the load bearing member. In other words, the weave fibers 34 establish ridges on the traction surface.

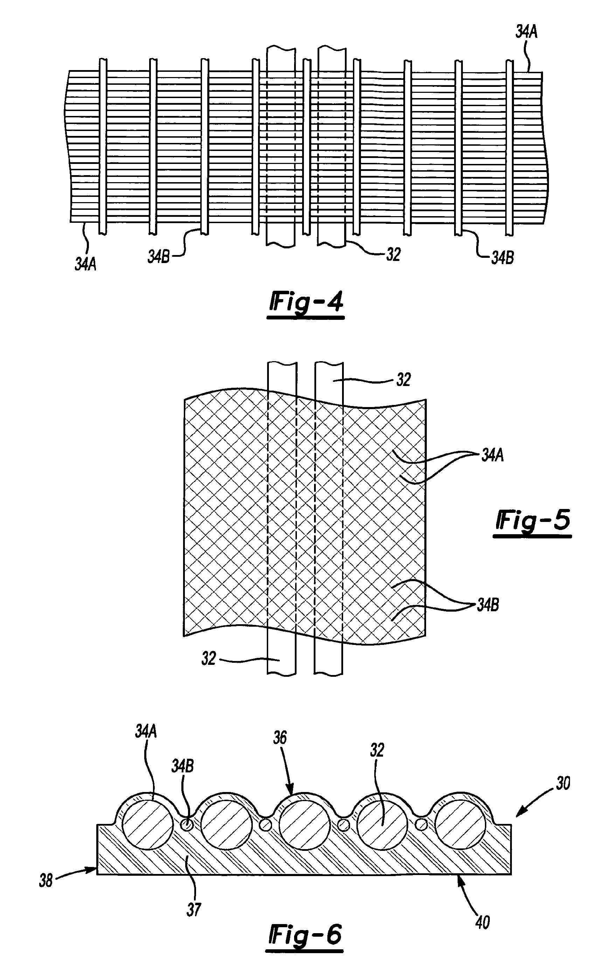

Figure 4 schematically illustrates another example weave pattern. In this example, some of the weave fibers 34a are arranged generally perpendicular to the longitudinal direction or length of the tension elements 32. Others of the weave fibers 34b are arranged generally parallel to the tension elements 32 and generally perpendicular to the weave fibers 34a. As can be appreciated by comparing Figure 4 to Figure 3, the example weave pattern of Figure 4 will have a slightly different characteristic on the traction surface 36 when the weave fibers 34b are included in a position between a tension element 32 and the traction surface 36. In another example, the weave fibers 34b are maintained only between the tension elements 32 and do not have an impact on the contour or texture of the traction surface 36.

Figure 5 illustrates another example weave pattern in which some of the weave fibers 34a are arranged parallel to each other and at a first angle relative to the tension elements 32. Others of the weave fibers 34b are arranged generally parallel to each other and at a second, different angle relative to the length or longitudinal direction of the tension elements 32. As can be appreciated from the illustration, a woven fabric using the weave pattern of Figure 5 will have a different traction surface texture or configuration compared to that which would be established by the weave patterns of Figures 3 or 4, for example.

In any of the examples of Figures 3-5, a relatively thin coating may be applied on top of the woven fabric in a manner that the weave pattern of the weave fibers 34 influences or defines the contour or texture on the traction surface 36 even though the weave fibers 34 are completely coated with another material. In other words, it is not necessary for any of the weave fibers 34 to be exposed at the traction surface 36 for them to define the contour or texture of the traction surface 36.

Figure 6 illustrates another example configuration of an elongated elevator load bearing member 30. In this example, a material 37 is provided over at least one side of the woven fabric that includes the tension elements 32 and the weave fibers 34 to form a jacket 38. In this example, the weave fibers 34a define the traction surface 36 on one side of the load bearing member 30 and the jacket 38 defines another surface 40 on an opposite side of the load bearing member 30. In some examples, the surface 40 will contact one or more sheaves in the elevator system 20 but the traction surface 36 is oriented to contact the traction sheave 31 to achieve a desired friction characteristic or traction between the load bearing assembly 30 and the traction sheave 31. The material 37 could be, for example, a suitable non-metallic, polymer material such as an elastomer like urethane including thermoplastic polyurethane.

In one example, the material 37 used for establishing the jacket 38 also provides a coating over the weave fibers 34 so that the jacket material also exists on the traction surface 36. The contour or texture of the traction surface 36 is still defined at least in part by the weave fibers 34.

In the example of Figure 6, the weave fibers 34b are positioned between the tension elements 32 and do not have an effect on the traction surface 36. In another example, additional weave fibers are positioned generally parallel to the weave fibers 34b and closer to the top of the tension elements 32 (according to the drawing) such that they will have an influence on the configuration or texture of the traction surface 36.

The disclosed examples provide a woven fabric as a basis for an elevator load bearing member. They also provide the ability to configure a traction surface based on the characteristics and arrangement of the weave fibers that are woven together with the tension elements.

The preceding description is exemplary rather than limiting in nature. Variations and modifications to the disclosed examples may become apparent to those skilled in the art.

## Claims

1. An elongated elevator load bearing member (30) for a traction elevator system (20), comprising:
a plurality of tension elements (32) that comprise metal;
a plurality of non-metallic weave fibers (34) transverse to the tension elements (32) and woven with the tension elements (32), the weave fibers (34) defining at least one traction surface (36) of the load bearing member (30); and
an elastomer coating over the weave fibers (34), the coating having an exterior surface texture defined at least in part by the weave fibers (34).

2. The elongated elevator load bearing member (30) of claim 1, wherein the weave fibers (34) establish a spacing between the traction surface (36) and the tension elements (32) that prevents the tension elements (32) from contacting a component (31) that the traction surface (36) engages.

3. The elongated elevator load bearing member (30) of claim 2, wherein weave fibers (34) are arranged in a pattern that comprises a predetermined spacing between the weave fibers (34) in a direction parallel to a length of the tension members (32).

4. The elongated elevator load bearing member (30) of claim 2, wherein the pattern comprises some of the weave fibers (34) aligned parallel to each other and at a first angle relative to the tension elements (32) and others of the weave fibers (34) aligned parallel to each other and at a second, different angle relative to the tension elements (32).

5. The elongated elevator load bearing member (30) of any preceding claim, wherein the weave fibers (34) comprise an elastomer material.

6. The elongated elevator load bearing member (30) of claim 5, wherein the weave fibers (34) include elastomer fibers.

7. The elongated elevator load bearing member (30) of claim 5, wherein the weave fibers (34) are at least partially coated with the elastomer material.

8. The elongated elevator load bearing member (30) of any preceding claim, wherein the coating comprises urethane.

9. The elongated elevator load bearing member (30) of any preceding claim, wherein the coating comprises thermoplastic polyurethane.

10. The elongated elevator load bearing member (30) of any preceding claim, wherein:
the coating comprises a jacket (38) including the at least one traction surface (36) on one side of the load bearing member (30);
the traction surface (36) has the exterior surface texture defined at least in part by the weave fibers (34);
the jacket (38) defines another surface (40) on an opposite side of the load bearing member (30);
the surface (40) on the opposite side is configured to contact one or more sheaves in the elevator system (20); and
the traction surface (36) is configured to contact a traction sheave (31) and the exterior surface texture is configured to achieve a desired friction characteristic or traction between the load bearing assembly (30) and the traction sheave (31).

11. A method of making an elongated elevator load bearing member (30) for a traction elevator system (20), comprising the steps of:
providing a plurality of metal tension elements (32);
weaving a plurality of non-metallic weave fibers (34) together with the tension elements (32);
establishing a traction surface (36) on at least one side of the load bearing member (30), the traction surface (36) being defined by the weave fibers (34); and
coating the weave fibers (34) with an elastomer coating, the coating having an exterior surface texture defined at least in part by the weave fibers (34).

12. The method of claim 11, comprising applying the coating to at least the weave fibers (34) subsequent to weaving the weave fibers (34) and the tension elements (32) together.

13. The method of claim 11, comprising establishing a spacing between the tension elements (32) and the traction surface (36) using the weave fibers (34).

14. The method of claim 13, comprising arranging the weave fibers (34) in a pattern that prevents the tension elements (32) from contacting a component (31) that the traction surface (36) engages.

15. The method of claim 11, comprising including elastomer material fibers in the weave fibers, or comprising at least partially coating the weave fibers with the elastomer material.

## Patentansprüche

1. Längliches Aufzuglastträgerelement (30) für ein Seilaufzugsystem (20), umfassend:
eine Mehrzahl von Spannelementen (32), die Metall umfassen;
eine Mehrzahl nicht-metallischer Bindungsfasern (34) quer zu den Spannelementen (32), die mit den Spannelementen (32) verwebt sind, wobei die Bindungsfasern (34) wenigstens eine Kraftschlussfläche (36) des Lastträgerelements (30) definieren; und
eine Elastomerbeschichtung über den Bindungsfasern (34), wobei die Beschichtung eines Außenflächenstruktur aufweist, die wenigstens teilweise durch die Bindungsfasern (34) definiert ist.

2. Längliches Aufzuglastträgerelement (30) nach Anspruch 1, wobei die Bindungsfasern (34) einen Abstand zwischen der Kraftschlussfläche (36) und den Spannelementen (32) herstellen, die verhindert, dass die Spannelemente (32) in Kontakt mit einer Komponente (31) gelangen, mit der die Kraftschlussfläche (36) in Eingriff steht.

3. Längliches Aufzuglastträgerelement (30) nach Anspruch 2, wobei die Bindungsfasern (34) in einem Muster angeordnet sind, das einen vorgegebenen Abstand zwischen den Bindungsfasern (34) in einer Richtung parallel zu einer Länge der Spannelemente (32) umfasst.

4. Längliches Aufzuglastträgerelement (30) nach Anspruch 2, wobei das Muster umfasst, dass einige der Bindungsfasern (34) parallel zueinander und in einem ersten Winkel relativ zu den Spannelementen (32) ausgerichtet sind und andere der Bindungsfasern (34) parallel zueinander und in einem zweiten, anderen Winkel relativ zu den Spannelementen (32) ausgerichtet sind.

5. Längliches Aufzuglastträgerelement (30) nach einem der vorangehenden Ansprüche, wobei die Bindungsfasern (34) ein Elastomermaterial umfassen.

6. Längliches Aufzuglastträgerelement (30) nach Anspruch 5, wobei die Bindungsfasern (34) Elastomerfasern aufweisen.

7. Längliches Aufzuglastträgerelement (30) nach Anspruch 5, wobei die Bindungsfasern (34) wenigstens teilweise mit dem Elastomermaterial beschichtet sind.

8. Längliches Aufzuglastträgerelement (30) nach einem der vorangehenden Ansprüche, wobei die Beschichtung Urethan umfasst.

9. Längliches Aufzuglastträgerelement (30) nach einem der vorangehenden Ansprüche, wobei die Beschichtung thermoplastisches Polyurethan umfasst.

10. Längliches Aufzuglastträgerelement (30) nach einem der vorangehenden Ansprüche, wobei:
die Beschichtung einen Mantel (38) auf einer Seite des Lastträgerelements (30) umfasst, der die wenigstens eine Kraftschlussfläche (36) aufweist;
die Außenflächenstruktur der Kraftschlussfläche (36) wenigstens teilweise durch die Bindungsfasern (34) definiert ist;
der Mantel (38) eine weitere Fläche (40) auf einer gegenüberliegenden Seite des Lastträgerelements (30) definiert;
die Fläche (40) auf der gegenüberliegenden Seite dazu konfiguriert ist, in Kontakt mit einer oder mehreren Seilscheiben im Aufzugsystem (20) zu treten; und
die Kraftschlussfläche (36) dazu konfiguriert ist, in Kontakt mit einer Treibscheibe (31) zu treten, und die Außenflächenstruktur dazu konfiguriert ist, einen gewünschten Reibungskennwert oder Kraftschluss zwischen der Lastträgerbaugruppe (30) und der Treibscheibe (31) zu erzielen.

11. Verfahren zum Herstellen eines länglichen Aufzuglastträgerelements (30) für ein Seilaufzugsystem (20), folgende Schritte umfassend:
Bereitstellen einer Mehrzahl von Metallspannelementen (32);
Verweben einer Mehrzahl von nicht-metallischen Bindungsfasern (34) zusammen mit den Spannelementen (32);
Herstellen einer Kraftschlussfläche (36) an wenigstens einer Seite des Lastträgerelements (30), wobei die Kraftschlussfläche (36) von den Bindungsfasern (34) definiert wird; und
Beschichten der Bindungsfasern (34) mit einer Elastomerbeschichtung, wobei die Beschichtung eine Außenflächenstruktur aufweist, die wenigstens teilweise von den Bindungsfasern (34) definiert wird.

12. Verfahren nach Anspruch 11, umfassend Auftragen der Beschichtung auf wenigstens die Bindungsfasern (34) nach dem Verweben der Bindungsfasern (34) und der Spannelemente (32) miteinander.

13. Verfahren nach Anspruch 11, umfassend Herstellen eines Abstands zwischen den Spannelementen (32) und der Kraftschlussfläche (36) mithilfe der Bindungsfasern (34).

14. Verfahren nach Anspruch 13, umfassend Anordnen der Bindungsfasern (34) in einem Muster, das verhindert, dass die Spannelemente (32) in Kontakt mit einer Komponente (31) gelangen, mit dem die Kraftschlussfläche (36) in Eingriff steht.

15. Verfahren nach Anspruch 11, umfassend Aufnehmen von Elastomermaterialfasern in die Bindungsfasern, oder umfassend wenigstens teilweise Beschichten der Bindungsfasern mit dem Elastomermaterial.

## Revendications

1. Elément allongé porteur de charge pour ascenseur (30) destiné à un système de traction d'ascenseur (20), comprenant :
un ensemble d'éléments de tension (32) qui contiennent du métal ;
un ensemble de fibres non métalliques à tisser (34) transversales vis-à-vis de l'élément de tension (32) et tissées avec les éléments de tension (32), les fibres à tisser (34) définissant au moins une surface de traction (36) de l'élément porteur de charge (30) ; et
un revêtement en élastomère sur les fibres à tisser (34), le revêtement présentant une texture de surface extérieure définie au moins en partie par les fibres à tisser (34).

2. Elément allongé porteur de charge pour ascenseur (30) selon la revendication 1, dans lequel les fibres à tisser (34) établissent un espacement entre la surface de traction (36) et les éléments de tension (32) qui empêchent les éléments de tension (32) de venir en contact avec un composant (31) où s'engage la surface de traction (36).

3. Elément allongé porteur de charge pour ascenseur (30) selon la revendication 2, dans lequel les fibres à tisser (34) sont disposées selon un motif comprenant un espacement prédéfini entre les fibres à tisser (34) dans une direction parallèle à une longueur des éléments de tension (32).

4. Elément allongé porteur de charge pour ascenseur (30) selon la revendication 2, dans lequel le motif comprend certaines des fibres à tisser (34) alignées parallèlement les unes par rapport aux autres et selon un premier angle par rapport aux éléments de tension (32) et aux autres fibres à tisser (34) alignées parallèlement les unes par rapport aux autres et selon un deuxième angle différent par rapport aux éléments de tension (32).

5. Elément allongé porteur de charge pour ascenseur (30) selon l'une quelconque des revendications précédentes, dans lequel les fibres à tisser (34) contiennent un matériau élastomère.

6. Elément allongé porteur de charge pour ascenseur (30) selon la revendication 5, dans lequel les fibres à tisser (34) contiennent des fibres élastomères.

7. Elément allongé porteur de charge pour ascenseur (30) selon la revendication 5, dans lequel les fibres à tisser (34) sont au moins en partie revêtues du matériau élastomère.

8. Elément allongé porteur de charge pour ascenseur (30) selon l'une quelconque des revendications précédentes, dans lequel le revêtement contient de l'uréthane.

9. Elément allongé porteur de charge pour ascenseur (30) selon l'une quelconque des revendications précédentes, dans lequel le revêtement contient du polyuréthane thermoplastique.

10. Elément allongé porteur de charge pour ascenseur (30) selon l'une quelconque des revendications précédentes, dans lequel :
le revêtement contient une chemise (38) contenant l'au moins une surface de traction (36) sur un côté de l'élément porteur de charge (30) ;
la surface de traction (36) présente la texture de surface extérieure définie au moins en partie par les fibres à tisser (34) ;
la chemise (38) définit une autre surface (40) sur un côté opposé de l'élément porteur de charge (30) ;
la surface (40) située sur le côté opposé est conçue pour venir en contact avec au moins une poulie dans le système d'ascenseur (20) ; et
la surface de traction (36) est conçue pour venir en contact avec une poulie de traction (31) et la surface extérieure est conçue pour donner une caractéristique de frottement ou une traction voulue entre l'élément porteur de charge (30) et la poulie de traction (31).

11. Procédé de fabrication d'un élément porteur de charge (30) destiné à un système de traction d'ascenseur (20), comprenant les étapes suivantes :
l'utilisation d'un ensemble d'éléments métalliques de tension (32) ;
le tissage d'un ensemble de fibres non métalliques à tisser (34) conjointement avec les éléments de tension (32) ;
l'établissement d'une surface de traction (36) sur au moins un côté de l'élément porteur de charge (30), la surface de traction (36) étant définie par les fibres à tisser (34) ; et
l'enduction des fibres à tisser (34) d'un revêtement d'élastomère, le revêtement présentant une texture de surface extérieure définie au moins en partie par les fibres à tisser (34).

12. Procédé selon la revendication 11, comprenant l'application du revêtement sur au moins les fibres à tisser (34) à la suite du tissage des fibres à tisser (34) et des éléments de tension (32) ensemble.

13. Procédé selon la revendication 11, comprenant l'établissement d'un espacement entre les éléments de tension (32) et la surface de traction (36) à l'aide des fibres à tisser (34).

14. Procédé selon la revendication 13, comprenant l'arrangement des fibres à tisser (34) selon un motif qui empêche les éléments de tension (32) de venir en contact avec un composant (31) où s'engage la surface de traction (36).

15. Procédé selon la revendication 11, comprenant l'inclusion de fibres de matériau élastomère dans les fibres à tisser, ou comprenant l'enduction au moins partielle des fibres à tisser avec le matériau élastomère.
